# FASCICULE DE BREVET EUROPEEN

(11) **EP 2 656 171 B1**
(45) Date de publication et mention de la délivrance du brevet: **21.08.2019**
(21) Numéro de dépôt: 11804690.3
(22) Date de dépôt: 22.12.2011
(51) Int. Cl.: G06F 1/32, G06F 9/48

(54) **PROCEDE DE GESTION DE LA CONSOMMATION ENERGETIQUE D'UNE APPLICATION EXECUTABLE DANS DIFFERENTS ENVIRONNEMENTS ET ARCHITECTURE LOGICIELLE METTANT EN UVRE UN TEL PROCEDE**
VERFAHREN ZUR VERWALTUNG DES ENERGIEVERBRAUCHS EINER AUSFÜHRBAREN ANWENDUNG IN VERSCHIEDENEN UMGEBUNGEN UND SOFTWAREARCHITEKTUR ZUR DURCHFÜHRUNG DIESES VERFAHRENS
METHOD OF MANAGING THE ENERGY CONSUMPTION OF AN APPLICATION EXECUTABLE IN VARIOUS ENVIRONMENTS AND SOFTWARE ARCHITECTURE IMPLEMENTING SUCH A METHOD

(30) Priorité: 23.12.2010 FR 1005092
(43) Date de publication de la demande: 30.10.2013
(73) Titulaire: THALES, 92400 Courbevoie (FR)
(72) Inventeur: BROEKART, Florian, F-92702 Colombes Cedex (FR)
(74) Mandataire: Lucas, Laurent Jacques
(86) Numéro de dépôt international: PCT/EP2011/073768
(87) Numéro de publication internationale: WO 2012/085192

(56) Documents cités:
- EP-A2- 1 544 716
- US-A1- 2006 112 377
- US-A1- 2007 220 530
- US-A1- 2008 313 640
- TOMMASO CUCINOTTA ET AL: "On the Integration of Application Level and Resource Level QoS Control for Real-Time Applications", IEEE TRANSACTIONS ON INDUSTRIAL INFORMATICS, IEEE SERVICE CENTER, NEW YORK, NY, US, vol. 6, no. 4, 1 novembre 2010 (2010-11-01), pages 479-491, XP011318789, ISSN: 1551-3203
- DONG LI ET AL: "Hybrid MPI/OpenMP power-aware computing", PARALLEL&DISTRIBUTED PROCESSING (IPDPS), 2010 IEEE INTERNATIONAL SYMPOSIUM ON, IEEE, PISCATAWAY, NJ, USA, 19 avril 2010 (2010-04-19), pages 1-12, XP031679849, ISBN: 978-1-4244-6442-5
- MATTHEW M Y KUO ET AL: "Determining the worst-case reaction time of IEC 61499 function blocks", INDUSTRIAL INFORMATICS (INDIN), 2010 8TH IEEE INTERNATIONAL CONFERENCE ON, IEEE, PISCATAWAY, NJ, USA, 13 juillet 2010 (2010-07-13), pages 1104-1109, XP031733593, ISBN: 978-1-4244-7298-7

## Description

La présente invention concerne un procédé de gestion de la consommation énergétique d'une application exécutable dans différents environnement. Elle concerne également une architecture logicielle mettant en oeuvre un tel procédé.

Les systèmes multiprocesseurs comportent des applications de plus en plus complexes requérant des performances de calcul croissantes. Ces performances croissantes se traduisent d'une part par des fréquences de fonctionnement de plus en plus élevées et par une augmentation du nombre de processeurs ainsi que des circuits associées, tels que les circuits de mémorisation. Ces deux types d'augmentation sont à l'origine d'une consommation électrique de plus en plus importante. Cette consommation est directement liée à la fréquence de fonctionnement des processeurs, du nombre de processeurs et à la tension d'alimentation.
En plus de l'augmentation de consommation électrique en tant que telles, deux autres inconvénients au moins sont liés : d'une part l'augmentation de la dissipation thermique qui joue sur le conditionnement des matériels, pouvant entraîner un redimensionnement de ceux-ci, et d'autre part une diminution du temps d'autonomie énergétique des matériels.
Les solutions connues traitant de la problématique de la gestion d'énergie dans les systèmes numériques se concentrent essentiellement sur la spécification du module d'ordonnancement des tâches, encore appelé ordonnanceur, ainsi que sur la stratégie de gestion d'énergie (« algorithme d'ordonnancement ») qui doit être appliquée. Dans un contexte temps réel, les architectures logicielles sont souvent dimensionnées pour le pire cas en fonction des applications supportées et des contraintes temporelles à respecter. La phase de dimensionnement caractérise notamment chaque tâche par une durée d'exécution au pire cas appelée WCET (Worst Case Execution Time). Une fois les WCET des différentes tâches calculé, les processeurs permettant le respect des WCET sont définis.

Des algorithmes et heuristiques, reposant par exemple sur des mécanismes appelés DVFS (Dynamic Voltage and Frequency Scalling) ou des modes basse consommation des composants, sont proposés. Les solutions du type DVFS exploitent notamment des excédents temporels par rapport aux WCET pour faire baisser la fréquence et la tension de certaines ressources. D'autres algorithmes se basent sur les techniques dites DPM (Dynamic Power Management) exploitant notamment les intervalles d'inactivité.
Les informations nécessaires au module de gestion d'énergie, fonction réalisée par l'ordonnanceur, sont décrites dans les solutions antérieures. Ces informations sont notamment les caractéristiques temporelles de l'application, la charge processeur ou encore les états des processeurs. Cependant la façon de récupérer ces informations ne sont pas précisées. Or, lors de la phase d'implémentation sur une cible la question des interfaces et des moyens de communication se pose.
Cet aspect est d'autant plus important si l'on souhaite proposer une solution exploitable facilement sur plusieurs plates-formes matérielles avec des systèmes d'exploitation (operating systems OS) différents. En effet dans ce cas, il est nécessaire de définir des interfaces et un moyen de communication qui soit le plus générique possible, c'est-à-dire en d'autres termes adaptable à un maximum de plates-formes.
Actuellement, la prise en compte de la gestion d'énergie intervient le plus souvent en fin de cycle de développement d'un produit. Il est donc important que les mécanismes proposés par cette gestion d'énergie aient un impact minimum sur la façon dont les applications sont implémentées. Pour traiter ce point, l'art antérieur ne propose pas de solution. En particulier dans les systèmes d'exploitation, rien n'est encore standardisé pour que les applications communiquent, au cours de l'exécution de celles-ci, des informations temporelles au moteur, ou librairie d'exécution, encore appelé « runtime », nécessaires à une gestion adéquate de l'énergie.
Une des difficultés dans l'utilisation et l'implémentation d'algorithmes de gestion de l'énergie repose sur la mise à disposition pour le « runtime », au cours de l'exécution des applications, d'informations pertinentes de l'application et celles des composants matériels, informations temporelles et états des processeurs notamment. A partir de ces informations de nombreuses heuristiques et stratégies de gestion d'énergie peuvent alors être réellement déployées. Ainsi, ce qui peut être considéré dans l'art antérieur comme étant une entrée directement exploitable n'est donc cependant pas un concept immédiat à mettre en oeuvre. En particulier la mesure du WCET n'est pas une information facile à obtenir. La communication entre l'application et l'exécution temps réelle en mode basse consommation (en activant les techniques de gestion d'énergie) doit ensuite avoir un impact minimum sur l'implémentation originelle de l'application pour ne pas nécessiter une restructuration complète du code applicatif. Comme indiqué précédemment, l'amélioration de la consommation électrique est une problématique qui est adressée en fin de développement de produit et nécessite ainsi généralement de faire avec les structures existantes.

L'art antérieur présente donc notamment les inconvénients suivant :
- manque de précisions sur les moyens de communication, en particulier les interfaces, entre l'application et le module de gestion d'énergie, l'ordonnanceur, entre la plate-forme matérielle et le module de gestion d'énergie ainsi qu'entre le système d'exploitation et le module de gestion d'énergie ;
- pas de traitement approprié de l'impact de la gestion d'énergie sur le développement applicatif ;
- manque de précisions pour que les solutions soient implantables directement au sein d'un système d'exploitation.
- Pas d'information pour que les solutions soient implantables faciement sur différentes cibles matérielles et systèmes d'exploitation. (solution portable)
- Pas d'information sur la façon d'obtenir une estimation du WCET

Un document US 2008/313640 A1 divulgue un procédé de gestion de consommation énergétique.
Un but de l'invention est de pallier les inconvénients précités. A cet effet l'invention a pour objet un procédé tel que défini par les revendications.
L'invention a également pour objet une architecture logicielle mettant en oeuvre le procédé selon l'invention.
D'autres caractéristiques et avantages de l'invention apparaîtront à l'aide de la description qui suit faite en regard de dessins annexés qui représentent :
- la figure 1, une vue globale des couches principales qui constituent un système embarqué;
- la figure 2, une illustration d'une architecture logicielle apte à mettre en oeuvre le procédé selon l'invention ;
- les figures 3 et 4, des exemples de définition de segments à l'intérieur de sections de code d'application ;
- la figure 5, une présentation des étapes possibles pour la mise en oeuvre du procédé selon l'invention.

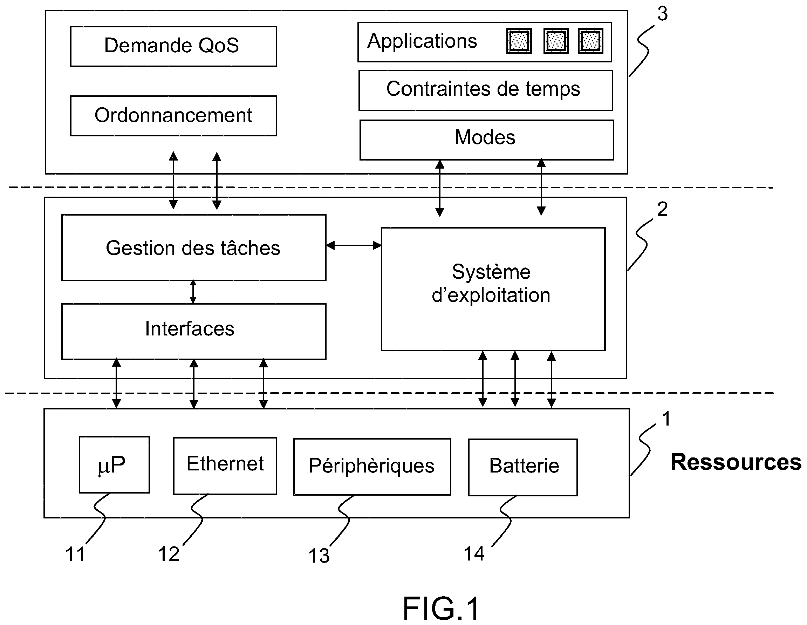

La figure 1 présente une vue globale les trois couches qui constituent un système embarqué classique. La première couche 1 est constituée du matériel. Ce matériel comporte les ressources de l'applicatif. Les ressources sont notamment constituées de processeurs 11, éventuellement d'un accès Ethernet 12, de périphériques 13 ainsi qu'une ou plusieurs batteries 14.
La deuxième couche 2 correspond au système d'exploitation. Celui-ci contient 3 services principaux. L'ordonnanceur des tâches 21, en relation avec un module de pilotage des interfaces 22 et un module d'observation des événements. Ces 3 services sont nécessaires à la mise en place de stratégie de gestion d'énergie.
La troisième couche 3 est constituée par l'applicatif, comportant les diverses applications à mettre en oeuvre. Classiquement, le système d'exploitation permet de faire fonctionner l'applicatif avec les ressources.

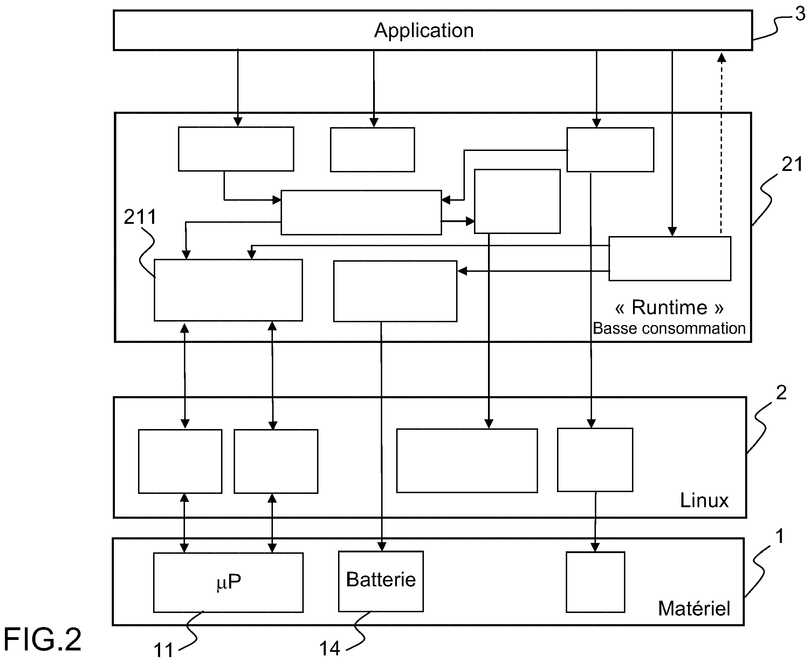

La figure 2 présente une architecture logicielle basse consommation selon l'invention. Plus particulièrement l'architecture logicielle selon l'invention utilise une librairie d'exécution 21, ou « runtime », spécifique permettant à des applications s'interfaçant avec cette libraire de fonctionner en basse consommation. Cette librairie d'exécution 21, dite basse consommation, peut être couplée aux trois couches 1, 2, 3 d'un système embarqué classique telles qu'illustrée par la figure 1. Dans l'architecture logicielle de la figure 2, le système d'exploitation 2 utilisé est par exemple le système Linux.
La librairie d'exécution 21 forme un environnement modulaire composé d'API (interfaces) et de composants logiciels permettant aux applications 3 s'enregistrant au sein de cette librairie, de bénéficier de stratégies de réduction de la consommation d'énergie sans que leurs performances soient dégradées. Cet environnement se base sur des interfaces et des moyens de communications lui permettant d'être portables sur différentes plates-formes matérielles et différents systèmes d'exploitation.
Une architecture logicielle selon l'invention telle qu'illustrée définit des interfaces entre :
- l'application 3 et la librairie d'exécution, ou « runtime », basse consommation 21 ;
- la librairie d'exécution basse consommation 21 et le système d'exploitation 2 ;
- la librairie d'exécution basse consommation 21 et le matériel, ou les ressources, 1.

En ce qui concerne les interfaces entre l'application 3 et la libraire d'exécution basse consommation 21, elles s'appuient notamment sur une extension de la libraire POSIX pour s'interfacer facilement avec les méthodes de développement logiciel couramment utilisées.
Selon l'invention, une structure spécifique est utilisée afin de communiquer les informations temporelles de l'application 3 à la librairie d'exécution 21 et de les mesurer. Cette structure repose sur la création de segments de code, décrits par la suite.
Avec les informations de mesure, il est alors possible d'appliquer une stratégie de réduction de la consommation. De cette façon, il est également possible de récupérer facilement les temps d'exécution au pire cas (WCET). Ainsi par ces interfaces :
- l'application 3 peut enregistrer ses contraintes de temps auprès de la librairie d'exécution, ou « runtime », 21 ;
- le « runtime » 21 peut connaître précisément où en est l'exécution du programme, cette information pouvant alors être très utile pour prendre des décisions de gestion consommation ;
- il est possible de suivre finement l'exécution d'une application et de communiquer ces informations à l'ordonnanceur ;
- il est possible de développer des stratégies de réduction de la consommation énergétique d'équipements embarqués incluant du logiciel temps-réel en faisant appel à des mécanismes du type DVFS ou DPM par l'ordonnanceur.

En ce qui concerne les interfaces entre le « runtime » 21 et le système d'exploitation 2, l'utilisation de la librairie POSIX rend l'architecture logicielle de la figure 2 portable sur différents systèmes d'exploitation compatibles avec POSIX.
En ce qui concerne les interfaces entre le « runtime » 21 et le matériel 1, on introduit un modèle de plate-forme matérielle et de ses comportements énergétiques. Une abstraction des états de consommation des différentes composants du matériel, notamment des processeurs, est donc proposé. Ce modèle peut s'appliquer à tous les composants du système qui intègrent différents modes d'énergie. Cela rend ainsi l'architecture logicielle facilement portable sur différentes plates-formes.
La stratégie de réduction de la consommation repose ensuite sur un algorithme d'ordonnancement multiprocesseur permettant de garantir un ordonnancement temps-réel tout en utilisant le niveau de ressources juste nécessaire. La solution proposée peut alors être un algorithme d'ordonnancement de type DVFS pouvant se combiner avec des informations provenant de la batterie 14 ou de toute autre source d'énergie.

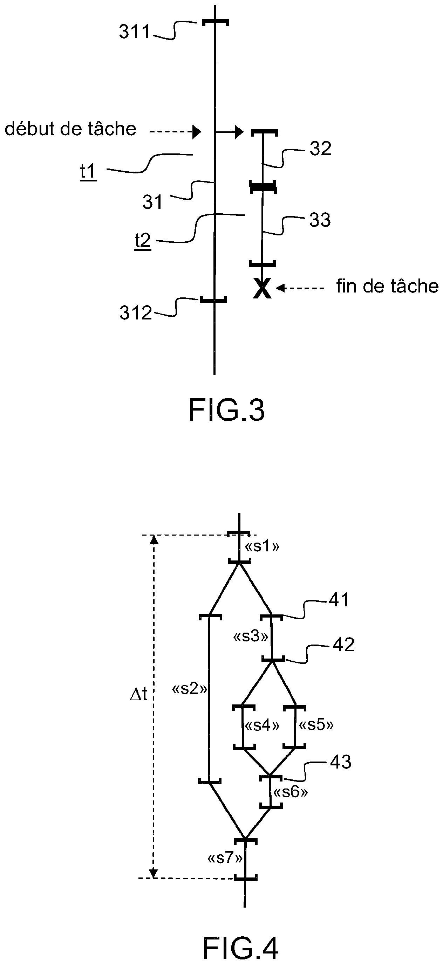

La figure 3 illustre une caractéristique de l'invention, plus particulièrement la création de segments 31, 31, 33 un segment correspondant à une section de code sous contrainte de temps. A chaque segment est associée une durée. Un segment 31 correspond donc à une section de code d'exécution qui est délimité par deux marqueurs 311, 312, ce marquage étant réalisé par des fonctions dédiées. Les segments sont notamment introduits en raison du fait que la durée des tâches POSIX, qui constituent un programme, ne peut être prédéfinie. Avec les segments 31, 32, 33, il est possible de découper une tâche complète t1, t2 en plusieurs sections de code, chaque section correspondant à un segment. Les marqueurs délimitant les segments sont choisis de façon à pouvoir associer notamment des caractéristiques de temps et de performance. Des contraintes temporelles peuvent ainsi être associées à des programmes, chaque contrainte temporelle ayant un début et une fin, ce début et cette fin délimitant par ailleurs un segment. En d'autres termes, un segment est caractérisé par sa durée d'exécution et peut donc être associé à une contrainte temporelle maximale observée.

Dans le cas de la figure 3, la tâche t1 peut comprendre plusieurs segments mais un seul segment 31 est présenté. Une autre tâche t2, peut être en concurrence avec une tâche t2. Cette dernière est découpée en deux segments successifs 32, 33. La fin de tâche t2 ne correspondant pas obligatoirement avec la fin du deuxième segment 33.

La figure 4 présente une tâche comprenant plusieurs branches, illustrant un cas où la tâche arrive sur un branchement conditionnel), les branches étant découpées en segments s1, s2, s3, s4, s5, s6, s7, chaque segment ayant un marqueur de début 41 et un marqueur de fin 42. Les marqueurs sont par exemple placés à des endroits spécifiques. Ils sont par exemple placés à des niveaux de tests 41 conditionnant le passage vers une section de code ou vers une autre, et à des endroits 43 où les deux sections conditionnelles se rejoignent. L'ensemble des segments s1, s2, s3, s4, s5, s6, s7 est placé entre le début et la fin d'une contrainte temporelle Δt qui est associée à l'ensemble de la tâche.
L'utilisation de plusieurs segments pour décrire les performances temporelles de certaines parties de programme sous contrainte est très avantageuse. En particulier, différentes branches du programme peuvent présenter des complexités variables. En conséquence, les différentes branches du programme peuvent varier de façon significative en termes de temps d'exécution. La maîtrise de la durée d'exécution des segments permet d'optimiser non seulement a posteriori le temps d'exécution, mais aussi de façon instantanée. Il est possible de mettre à jour de façon dynamique le temps d'exécution maximal restant pour une section de programme sous contrainte de temps.
On revient à l'architecture logicielle de la figure 2, en décrivant les fonctionnalités et interfaces qui suivent.

### Lancement de l'application :

Pour lancer les applications, on définit un nouvel argument à passer en paramètre. Cet argument permet de préciser si le « runtime » est activé et dans quel mode il est appliqué. L'application est lancée (« commande launch ») et comprent les arguments suivants.

```
 « launch *(--runtime_conf [runtime_configuration]) [application] *(
 application_args) »
```

Les paramètres sont :
[runtime_configuration] (décrivant si le runtime est à activer et dans quel mode l'utiliser) ;
[application] (nom du programme à executer) ;
[application_args] (arguments standard POSIX (POSIX argc, argv)).

### Création de tâches, lancement et configuration :

Pour la création de tâches, le lancement et la configuration de fonctions, on utilise les interfaces de tâche du standard POSIX comme suit par exemple :
typedef void* (pthread_func)(void*);
- pthread_create(pthread_t* t, pthread_attr_t* attrib, pthread_func* f, void* args);
- pthread_attr_init(pthread_attr_t*);
- pthread_exit (unsigned int);

Pour être en mesure de prendre en compte les segments 31, 32, 33, des extensions des attributs des tâches POSIX sont définies. Les attributs vont notamment permettre de détecter, dans les tâches constituant l'application, les segments de programmes, en particulier leur début et leur fin.

### Structures de données et mécanisme pour communiquer les requêtes et les temps au système d'exploitation 2 :

### ▪ Structure de données

Il est nécessaire de définir des moyens de programmation permettant d'avertir de l'existence de segments 31, 32, 33 dans le programme et de détecter leur début et leur fin.
Les structures de données suivantes sont prévues en vue de déclarer les segments selon la primitive suivante :

```
    typedef struct pthread_segment {
           char* name;
          void* private;
}; 
```

Le pointeur "private" est une structure opaque introduite pour transmettre d'autres attributs au segment de tâche en cas de besoin. A ce stade, seul le nom est associé au segment. Les instructions sont par exemple les suivantes :

```
 « int pthread_register_segment(pthread_segment* ps, char* name);
```

Arguments:
- name : new segment name
- private : user-managed data-structure.

Return value:
- 0 if success
- != 0 if segment name has been already registered for the application »

Des fonctions sont aussi fournies pour faire office de marqueur de début et de fin de segments, c'est-à-dire pour marquer le début et la fin des segments, dans l'implémentation d'une tâche. Les instructions sont par exemple les suivantes :

```
 « int pthread_set_segment_name(pthread_t thread, char* name);
```

Arguments:
- thread: thread to associate the segment name to. Typically pthread_self()
- name: name of the segment that is entered.

Return value:
- 0 if success
- INVALID_THREAD if lifecycle of thread is inconsistent with setting a new segment to it.
- ETHREAD_SEGMENT_UNKNOWN if segment has not been registered before»

### ▪ Caractéristiques temporelles de l'application

Les caractéristiques temporelles de l'application sont fournies. Ces caractéristiques sont les durées d'exécution des segments de code 31, 32, 33 pour différents systèmes d'exploitation.

A cet effet, la primitive suivante peut être définie, associant une durée d'exécution d'un segment pour un système donné :

```
 « int pthread_associate_segment_characteristic(pthread_segment* ps,
                                     unsigned long
                                     elem_computing_state,
 timeval* min_duration,
 timeval* max_duration);
```

Arguments:
- ps : pthread_segment instance managed by user
- elem_computing_state : index of performance mode for a given core (available in filesystem as described later on in the document).
- min_duration / max_duration : minimum/maximum durations for executing the segment in the conditions of elem_computing_state.

Return value:
- 0 if success
- EINVALID_MODE if elem_compute_state does is not recognized
- EINVALID_SEGMENT if ps has not been declared
- EINVALID_DURATIONS if min_duration > max_duration »

### ▪ Contraintes temporelles de l'application

Les contraintes temporelles de l'application sont notamment les durées de temps allouées pour les différentes tâches entraînant des dates limites de fin de tâche.

La structure de donnée sched_param de POSIX est par exemple étendue pour être générique selon la primitive suivante :

```
 « typedef struct sched_param {
 unsigned int sched_priority; // from standard POSIX
 void* private;
 }; »
```

Le pointeur "private" est une structure opaque introduite pour transmettre les règles d'ordonnancement des tâches, notamment les dates limites, selon les instructions suivantes par exemple :

```
 « typedef struct sched_param_deadline {
 timeval relative_deadline;
 };
```

void sched_param_deadline_initialise(sched_param* s, timeval* rel_deadline);
void sched_param_deadline_finalise(sched_param* s); »

A côté des dates limites, des structures de données utilisées comme entrées de l'ordonnanceur sont par exemple définie de façon spécifique.

### ▪ Décisions de l'ordonnanceur aux points d'ordonnancement :

Les entités ordonnancées correspondent aux segments de tâches. En chaque point d'ordonnancement, à l'issue de l'exécution d'un segment de code, une décision de changer les états des processeurs peut être prise par le « runtime » 21. Un état est notamment défini par un couple tension-fréquence appliqué à un processeur.
Les états des processeurs à appliquer dépendent notamment des paramètres suivant : le temps alloué à la tâche, la durée de la tâche et son état d'avancement. La durée de la tâche peut être définie par les segments. En fonction de l'issue d'un segment où se situe l'état d'avancement d'une tâche, l'ordonnanceur peut décider d'appliquer une stratégie d'économie d'énergie donnée fonction des paramètres précités, c'est à dire définir quel est l'état du processeur ou du composant matériel qui doit être appliqué.

Le « runtime » 21 comporte un module 211 de gestion et de modélisation de l'état des processeurs. Ce module 211 est interfacé avec les processeurs 11 via le système d'exploitation. Il a notamment pour fonction de mettre chaque processeur dans un état de puissance et de performance donné, par exemple en termes de tension et de fréquence. Un jeu d'états est par exemple décrit dans le module 211. Un état est appliqué en fonction des stratégies définies par le « runtime » 21. Avantageusement, une étape de modélisation générique des états des processeurs peut être réalisée, la modélisation d'un processeur décrivant ses performances d'exécution d'une section de code de l'application en fonction de sa tension d'alimentation et de sa fréquence, la modélisation étant adaptable à différents types de processeurs. Cela rend ainsi l'approche proposée facilement portable sur différentes cibles matérielles.

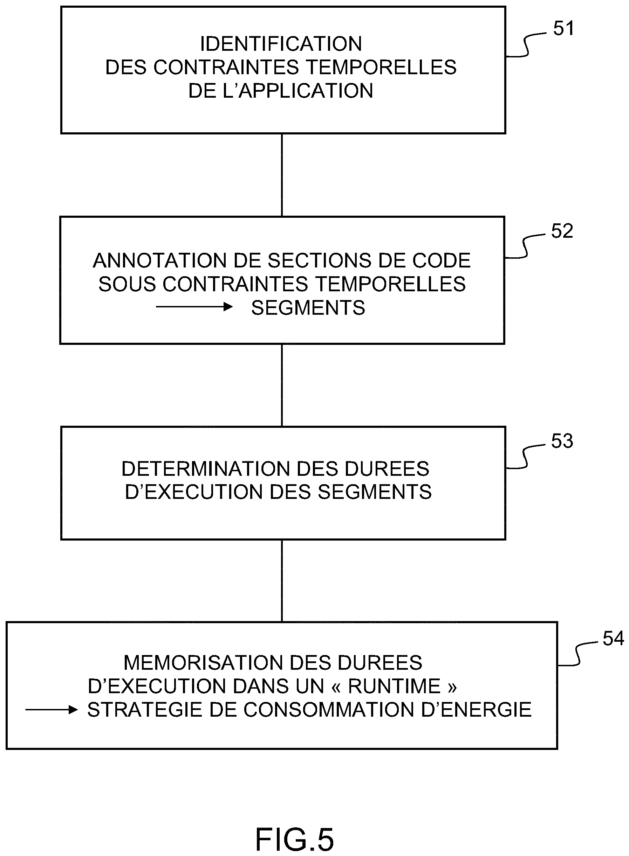

La figure 5 illustre les étapes possibles pour la mise en oeuvre du procédé selon l'invention, appliqué à une application donnée. Cette application est exécutable par différents types de matériels et de système d'exploitation. On se place à titre d'exemple dans le cas d'une architecture logicielle telle que définie par la figure 2.
Le procédé comporte une première étape 51 d'identification des contraintes temporelles de l'application 1. Pour illustrer des contraintes temporelles, on peut considérer à titre d'exemple une application vidéo. Dans ce cas, plusieurs contraintes de temps peuvent être définies, dépendant notamment de la qualité de service. Il faut ainsi 40 millisecondes pour décoder une image si un taux de 25 images par secondes est demandé. Cette contrainte temporelle peut être plus faible si une plus faible qualité de service est requise.
La première étape 51 est suivie d'une deuxième étape 52 d'annotation des sections de codes de l'application soumises à des contraintes temporelles. L'annotation est réalisée par le marquage logiciel des sections de codes soumises à des contraintes de temps. Un code du type « Set segment name » permet de déclarer le début d'un nouveau segment par exemple.
Ces sections de code, sous contraintes temporelles, ont par ailleurs des durées d'exécutions variables. Les marques logicielles délimitent les segments comme illustrés par les figures 3 et 4. La connaissance de la durée d'exécution au pire cas de ces segments permettra par la suite une gestion appropriée de la consommation d'énergie en jouant sur l'état des processeurs.

Une troisième étape 53 de calibration permet d'obtenir la durée au pire cas des segments définis dans l'étape précédente. Dans cette étape, chaque processeur exécute les sections de code dans les différents modes possibles envisagés. Ces exécutions qui se font sans imposer de dates limites d'exécution permettent d'obtenir les durées d'exécution au pire cas WCET pour tous les segments, par rapport à chaque processeur ou modèle de processeur. Cette troisième étape 53 de calibration, empirique, peut être remplacée par une étape de détermination des WCET par une étude analytique.

Dans une quatrième étape 54, les durées d'exécution au pire cas des segments sont mémorisées dans la librairie d'exécution 21, et pour chaque mode d'exécution retenu.
Grâce aux segments au sein de l'application 3 qui ont pu être définis au cours de la deuxième étape 52, la librairie d'exécution, ou « runtime », 21 aura accès à des informations temporelles (ces durées d'exécution) au cours de l'exécution concernant cette application.
A l'aide de ces informations temporelles sur les segments, des stratégies de gestion de consommation peuvent ensuite être déployées par le « runtime » 21. Ce dernier comporte un ordonnanceur qui a notamment pour objectif de trouver l'état des processeurs le mieux adapté pour exécuter une tâche donnée. Ce module ordonnanceur peut implémenter différentes stratégies d'ordonnancement à partir de la connaissance des WCET des segments composant les différentes sections de code sous contrainte.
Par ailleurs, la modélisation des processeurs donne au « runtime » 21 une vision globale des différents états possibles pour les processeurs, utilisables pour une stratégie de type DVFS ou DPM par exemple. Cette modélisation des processeurs est générique et permet ainsi de s'adapter facilement à différents types d'architectures. Elle peut également s'appliquer à des périphériques.

L'invention permet avantageusement d'assurer la portabilité de la solution sur différents systèmes d'exploitation grâce aux extensions qui ont été définies pour les tâches Posix notamment.

## Revendications

1. Procédé de gestion de la consommation énergétique d'une application donnée (3), ladite application étant exécutable par un matériel (1) comportant un ensemble de processeurs (11) à l'aide d'un système d'exploitation (2), ledit procédé comportant au moins les étapes suivantes :
- une première étape (51) d'identification des contraintes temporelles de l'application ;
- une deuxième étape (52) d'annotation de sections de code (t1, t2) de l'application soumises à une contrainte temporelle, ladite annotation étant effectuée au moyen de marqueurs logiciels;
**caractérisé en ce que** les marqueurs logiciels délimitent des segments de code (31, 32, 33) et que ledit procédé comporte:
- une troisième étape (53) de détermination des durées d'exécution au pire cas des segments dans un ensemble de modes d'exécutions donné ;
- une quatrième étape (54) de mémorisation des durées d'exécution des segments dans une bibliothèque d'exécution (21) pour chaque mode d'exécution, ladite bibliothèque (21) étant apte à être interfacée avec ledit matériel (1), ledit système d'exploitation (2) et ladite application (3) et à exécuter, a l'aide desdites durées d'exécution, une stratégie de gestion énergétique par la commande de l'état des processeurs (11).

2. Procédé selon la revendication 1, **caractérisé en ce que** la troisième étape (53) est une étape de calibration où chaque processeur (11) exécute les sections de codes sans contrainte temporelle pour déterminer la longueur d'exécution au pire cas des segments.

3. Procédé selon l'une quelconque des revendications précédentes, **caractérisé en ce que** la bibliothèque d'exécution (21) commande l'état des processeurs (11) selon la technique dite DVFS, l'état d'un processeur étant défini par sa tension d'alimentation et sa fréquence de fonctionnement.

4. Procédé selon l'une des revendications 1 ou 2, **caractérisé en ce que** la bibliothèque d'exécution (21) commande l'état des processeurs (11) selon la technique dite DPM, l'état d'un processeur étant défini par sa tension d'alimentation et sa fréquence de fonctionnement.

5. Procédé selon l'une quelconque des revendications précédentes **caractérisé en ce qu'**une extension de tâche POSIX est intégrée dans l'application pour communiquer les durées d'exécution à la librairie d'exécution (21),

6. Procédé selon la revendication 5, **caractérisé en ce que** des extensions des attributs des tâches POSIX sont définies, les attributs permettant de détecter le début et la fin des segments de code de l'application (3).

7. Procédé selon l'une quelconque des revendications précédentes, **caractérisé en ce qu'**il comporte une étape de modélisation générique des états des processeurs, la modélisation d'un processeur décrivant ses performances d'exécution d'une section de code de l'application en fonction de sa tension d'alimentation et de sa fréquence, ladite modélisation étant adaptable à différents types de processeurs.

8. Architecture logicielle comportant un matériel (1) incluant un ensemble de processeurs (11), un système d'exploitation (2) et une application (3), ladite application étant exécutable par le matériel à l'aide du système d'exploitation, ladite architecture logicielle comportant une libraire d'exécution (21) et étant apte à mettre en oeuvre le procédé selon l'une quelconque des revendications précédentes.

## Patentansprüche

1. Verfahren zum Verwalten der Leistungsaufnahme einer gegebenen Anwendung (3), wobei die Anwendung von einer einen Satz von Prozessoren (11) umfassenden Hardware (1) mit Hilfe eines Betriebssystems (2) ausgeführt werden kann, wobei das Verfahren wenigstens die folgenden Schritte beinhaltet:
- einen ersten Schritt (51) des Identifizierens von zeitlichen Beschränkungen der Anwendung;
- einen zweiten Schritt (52) des Annotierens von Code-Sektionen (t1, t2) der Anwendung, die einer zeitlichen Beschränkung unterliegen, wobei die Annotation mittels Software-Markern erfolgt;
**dadurch gekennzeichnet, dass** die Software-Marker Code-Segmente (31, 32, 33) begrenzen und das Verfahren Folgendes beinhaltet:
- einen dritten Schritt (53) des Feststellens der Ausführungsdauern von Segmenten im ungünstigsten Fall in einem Satz von gegebenen Ausführungsmodi;
- einen vierten Schritt (54) des Speicherns von Ausführungsdauern der Segmente in einer Ausführungsbibliothek (21) für jeden Ausführungsmodus, wobei die Bibliothek (21) mit der Hardware (1), dem Betriebssystem (2) und der Anwendung (3) gekoppelt werden und anhand der Ausführungsdauern eine Energieverwaltungsstrategie durch Steuern des Zustands der Prozessoren (11) ausführen kann.

2. Verfahren nach Anspruch 1, **dadurch gekennzeichnet, dass** der dritte Schritt (53) ein Kalibrationsschritt ist, in dem jeder Prozessor (11) Code-Sektionen ohne zeitliche Beschränkung ausführt, um die Ausführungslänge von Segmenten im ungünstigsten Fall zu bestimmen.

3. Verfahren nach einem der vorherigen Ansprüche, **dadurch gekennzeichnet, dass** die Ausführungsbibliothek (21) den Zustand von Prozessoren (11) gemäß der sogenannten DVFS-Technik steuert, wobei der Zustand eines Prozessors durch seine Versorgungsspannung und seine Betriebsfrequenz definiert wird.

4. Verfahren nach Anspruch 1 oder 2, **dadurch gekennzeichnet, dass** die Ausführungsbibliothek (21) den Zustand von Prozessoren (11) gemäß der sogenannten DPM-Technik steuert, wobei der Zustand eines Prozessors durch seine Versorgungsspannung und seine Betriebsfrequenz definiert wird.

5. Verfahren nach einem der vorherigen Ansprüche, **dadurch gekennzeichnet, dass** eine POSIX-Aufgabenerweiterung in die Anwendung integriert ist, um die Ausführungsdauern an die Ausführungsbibliothek (21) zu übermitteln.

6. Verfahren nach Anspruch 5, **dadurch gekennzeichnet, dass** die Erweiterungen von Attributen von POSIX-Aufgaben definiert sind, wobei die Attribute das Erkennen des Anfangs und des Endes der Code-Segmente der Anwendung (3) zulassen.

7. Verfahren nach einem der vorherigen Ansprüche, **dadurch gekennzeichnet, dass** es einen Schritt des generischen Modellierens von Zuständen von Prozessoren beinhaltet, wobei die Modellierung eines Prozessors seine Leistungen beim Ausführen einer Code-Sektion der Anwendung in Abhängigkeit von seiner Versorgungsspannung und seiner Frequenz beschreibt, wobei die Modellierung an unterschiedliche Prozessortypen angepasst werden kann.

8. Software-Architektur, die eine Hardware (1) umfasst, die einen Satz von Prozessoren (11), ein Betriebssystem (2) und eine Anwendung (3) beinhaltet, wobei die Anwendung von der Hardware mit Hilfe des Betriebssystems ausgeführt werden kann, wobei die Software-Architektur eine Ausführungsbibliothek (21) umfasst und das Verfahren nach einem der vorherigen Ansprüche implementieren kann.

## Claims

1. Method for managing the energy consumption of a specific application (3), the application being able to be carried out using a hardware item (1) comprising an assembly of processors (11) using an operating system (2), the method comprising at least the following steps:
- a first step (51) of identifying the time constraints of the application;
- a second step (52) of annotating code sections (t1,t2) of the application which are subject to a time constraint, the annotation being carried out using software markers;
**characterised in that** the software markers delimit code segments (31, 32, 33) and **in that** the method comprises:
- a third step (53) of determining the worst-case segment run times in a specific set of run modes;
- a fourth step (54) of storing the segment run times in an execution library (21) for each run mode, the library (21) being capable of being interfaced with the hardware item (1), the operating system (2) and the application (3) and executing, using the run times, an energy management strategy by controlling the state of the processors (11).

2. Method according to claim 1, **characterised in that** the third step (53) is a calibration step, wherein each processor (11) carries out the code sections without time constraint in order to determine the worst-case run length of the segments.

3. Method according to either of the preceding claims, **characterised in that** the execution library (21) controls the state of the processors (11) in accordance with the so-called DVFS technique, the state of a processor being defined by the supply voltage thereof and the operating frequency thereof.

4. Method according to either claim 1 or claim 2, **characterised in that** the execution library (21) controls the state of the processors (11) in accordance with the so-called DPM technique, the state of a processor being defined by the supply voltage thereof and the operating frequency thereof.

5. Method according to any one of the preceding claims, **characterised in that** a POSIX task extension is integrated in the application in order to communicate the run times to the execution library (21).

6. Method according to claim 5, **characterised in that** extensions of the POSIX task attributes are defined, the attributes enabling the beginning and the end of the code segments of the application to be detected.

7. Method according to any one of the preceding claims, **characterised in that** it comprises a step of generic modelling of the processor states, the modelling of a processor describing the performance levels thereof for executing a code section of the application in accordance with the supply voltage thereof and the frequency thereof, the modelling being able to be adapted to different types of processor.

8. Software architecture comprising a hardware item (1) which includes an assembly of processors (11), an operating system (2) and an application (3), the application being able to be carried out via the hardware item using the operating system, the software architecture comprising an execution library (21) and being capable of implementing the method according to any one of the preceding claims.
